# EUROPÄISCHE PATENTSCHRIFT

(11) **EP 3 901 715 B1**
(45) Veröffentlichungstag und Bekanntmachung des Hinweises auf die Patenterteilung: **02.08.2023**
(21) Anmeldenummer: 21164328.3
(22) Anmeldetag: 23.03.2021
(51) Int. Cl.: G05B 19/042, H04L 9/32, G06F 21/44, G06F 21/70, H04L 9/08

(54) **VERFAHREN ZUR ÜBERPRÜFUNG DER AUTHENTISCHEN HERKUNFT VON ELEKTRONISCHEN MODULEN EINES MODULAR AUFGEBAUTEN FELDGERÄTS DER AUTOMATISIERUNGSTECHNIK**
METHOD FOR VERIFYING THE AUTHENTIC ORIGIN OF ELECTRONIC MODULES OF A MODULAR FIELD DEVICE OF AUTOMATION TECHNOLOGY
PROCÉDÉ DE VÉRIFICATION DE L'ORIGINE AUTHENTIQUE DES MODULES ÉLECTRONIQUES D'UN APPAREIL DE TERRAIN MODULAIRE DE LA TECHNIQUE DE L'AUTOMATISATION

(30) Priorität: 22.04.2020 DE 102020111020
(43) Veröffentlichungstag der Anmeldung: 27.10.2021
(73) Patentinhaber: Endress + Hauser Conducta GmbH+Co. KG, 70839 Gerlingen (DE)
(72) Erfinder: Alber, Thomas, 70567 Stuttgart (DE)
(74) Vertreter: Trenkle, Dennis

(56) Entgegenhaltungen:
- CN-A- 110 138 562
- DE-A1-102017 111 928
- US-A1- 2004 260 928
- US-A1- 2005 138 387

## Beschreibung

Die Erfindung betrifft ein Verfahren zur Überprüfung der authentischen Herkunft von elektronischen Modulen eines modular aufgebauten Feldgeräts der Automatisierungstechnik gemäß Patentanspruch 1.

In der Prozessautomatisierung ebenso wie in der Fertigungsautomatisierung werden vielfach Feldgeräte zur Erfassung und/oder Beeinflussung von physikalischen, chemischen oder biologischen Prozessgrößen eingesetzt. Zur Erfassung der Prozessgrößen dienen Messgeräte. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung der Prozessgrößen werden Aktorsysteme verwendet. Beispiele für Aktoren sind Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind. Im Zusammenhang mit der Erfindung werden als Feldgeräte alle Geräte bezeichnet, die in der Nähe des Prozesses oder der Anlage eingesetzt werden und die prozess- oder anlagerelevante Informationen liefern oder verarbeiten.

Entsprechende Feldgeräte bestehen üblicherweise aus einer Vielzahl von elektronischen Modulen, wie z.B. Steckmodulen mit Leiterkarten, Sensoren mit digitaler Anbindung, usw. Erfolgt der Austausch oder das Hinzufügen eines elektronischen Moduls, so wird heute nicht geprüft, ob das elektronische Modul hinsichtlich seiner Herkunft authentisch ist, d.h. ob eine elektronische Baugruppe von einem Originalhersteller oder von einem als vertrauenswürdig eingestuften Hersteller stammt - und in der Lage ist, das auch zu beweisen. Die Authentizität der Herkunft eines elektronischen Moduls wird vor dem Einbau bislang nicht zuverlässig überprüft. Bestenfalls erfolgt eine visuelle Überprüfung, wenn der Einbau von einem fachlich versierten Servicetechniker durchgeführt wird. Ist die Sichtinspektion positiv, wird angenommen, dass das elektronische Modul in dem Feldgerät eingebaut werden kann.

Die zuvor beschriebene Vorgehensweise birgt ein beachtliches Sicherheitsrisiko: Da im Prinzip bislang keine Möglichkeit besteht, ein elektronisches Modul, das von einem nicht autorisierten Hersteller auf den Markt gebracht wird, zu erkennen, besteht die Gefahr, dass elektronische Module zum Einsatz in Feldgeräten kommen, die nicht die erforderlichen Sicherheitsbestimmungen erfüllen. Erfüllt ein elektronisches Modul z.B. nicht die Anforderungen für den Einsatz in einem explosionsgefährdeten Bereich, kommt aber in der Automatisierungstechnik in einem solchen Bereich zum Einsatz, so kann dies durchaus lebensbedrohliche Auswirkungen haben.

Die US 2004/260928 A1 und die DE 10 2017 111928 A1 offenbaren Beispiele zur Validierung, beziehungsweise Authentifizierung, von Modulen, bzw. Software-Modulen.

Die US 2005/138387 A1 zeigt ein Verfahren zum Autorisieren der Verwendung eines Softwarepakets, das an einen Benutzer verteilt wird, wobei das Verfahren das Ausstellen einer Smartcard an den Benutzer umfasst, die Zugriff auf das Softwarepaket gewährt, und das Gewähren von Zugriffsrechten für den Benutzer auf das Softwarepaket durch Authentifizieren der Smartcard unter Verwendung von asymmetrischer Kryptografie auf Public Key Basis.

Der Erfindung liegt die Aufgabe zugrunde, ein Verfahren vorzuschlagen, über das sichergestellt wird, dass nur von autorisierten Herstellern stammende elektronische Module in Feldgeräten der Automatisierungstechnik funktional eingesetzt werden können.

Die Aufgabe wird gelöst durch ein Verfahren zur Überprüfung der authentischen Herkunft von elektronischen Modulen eines modular aufgebauten Feldgeräts der Automatisierungstechnik, wobei jedem als vertrauenswürdig eingestuften Hersteller eines elektronischen Moduls des Feldgeräts ein Schlüsselpaar bestehend aus einem Public Key und einem Private Key zugeordnet ist, und wobei die Public Keys der als vertrauenswürdig eingestuften Hersteller in einer Liste im Feldgerät oder in einer mit dem Feldgerät kommunizierenden Einheit gespeichert sind. Jedes elektronische Modul des Feldgeräts enthält neben einem das elektronische Modul identifizierenden Schlüsselpaar, bestehend aus einem Public Key und einem Private Key, den Public Key des Herstellers und eine Herstellersignatur, mit der der Public Key des elektronischen Moduls als vertrauenswürdig bestätigt wird. Insbesondere handelt es sich bei der Herstellersignatur um die Verschlüsselung des Public Key des elektronischen Moduls mit dem Private Key des autorisierten Herstellers. Alternativ ist es auch möglich, dass die Herstellersignatur direkt oder indirekt über einen sog. Digital Signature Algorithm (DSA, ECDSA o.ä.), also einen digitalen Signaturalgorithmus, erzeugt wird.

Das Verfahren besitzt die folgenden Verfahrensschritte:
beim Austausch oder beim Hinzufügen eines elektronischen Moduls wird von dem Feldgerät oder der mit dem Feldgerät kommunizierenden Einheit überprüft:
- ob das ausgetauschte oder hinzugefügte elektronische Modul ein Schlüsselpaar und eine Herstellersignatur aufweist,
- ob der Public Key des Herstellers des elektronischen Moduls in der Liste mit den Public Keys der als vertrauenswürdig eingestuften Hersteller aufgeführt ist; es ist auch möglich, eine zusätzliche mit dem Public Key des jeweiligen Herstellers assozierte Identitätsform in der Liste abzuspeichern. Dies kann vorteilhaft sein, wenn die Identitätsform so gewählt ist, dass sie weniger Speicherplatz benötigt als der Public Key des Herstellers und somit schneller übertragen werden kann.
- ob die Herstellersignatur zum Hersteller und zum elektronischen Modul passt, also ob das elektronische Modul auch tatsächlich vom vertrauenswürdigen Hersteller stammt, und
- ob das elektronische Modul im Besitz des korrekten Private Key ist.

Eine die Funktionalität des Feldgeräts betreffende Kommunikation oder Interaktion des ausgetauschten oder hinzugefügten elektronischen Moduls mit dem Feldgerät oder einem anderweitigen elektronischen Modul wird zugelassen, wenn die Überprüfung mit einem positiven Ergebnis abgeschlossen wird.

Bei den elektronischen Modulen handelt es sich insbesondere um Steckmodule mit Leiterkarten oder um Sensoren mit digitaler Anbindung. Bevorzugt handelt es sich um intelligente Sensoren, z.B. Memosens-Sensoren, die über steckbare Kabel mit einem zentralen Umformer verbunden sind. Bei den Sensoren handelt es sich z.B. um pH Sensoren, Trübungssensoren, Leitfähigkeitssensoren, usw. Geeignete Umformer werden z.B. unter der Bezeichnung CM42, CM44 oder Liquiline von der Anmelderin angeboten und vertrieben. Um sicherzustellen, dass nur Sensoren autorisierter Hersteller an den den Umformer/Transmitter angeschlossen werden, ist das erfindungsgemäße Verfahren bestens geeignet. Insbesondere pH Sensoren müssen je nach Anwendungsfall in mehr oder weniger langen Zeitabständen kalibriert werden. Die Kalibrierung erfolgt üblicherweise unter Verwendung einer PC Applikation (z.B. Memobase Plus der Anmelderin) im Labor; die ermittelten Kalibrierdaten werden in dem zugehörigen Sensor gespeichert. Auch hier kann das erfindungsgemäße Verfahren vorteilhaft eingesetzt werden, um Sensoren autorisierter Hersteller von Fake Sensoren zu unterscheiden.

Zusammenfassend kann gesagt werden, dass erfindungsgemäß geprüft wird, a) ob die Hersteller der elektronischen Module vertrauenswürdig sind und
b) ob die Module auch tatsächlich von den vertrauenswürdigen Herstellern gefertigt wurden. Oder anders ausgedrückt: Ein elektronisches Modul eines als vertrauenswürdig erkannten Herstellers wird akzeptiert, wenn das elektronische Modul in der Lage ist nachzuweisen, dass es auch tatsächlich von diesem Hersteller gefertigt wurde. Unter Herstellersignatur wird im Zusammenhang mit der Erfindung beispielhaft die Verschlüsselung des Public Key des elektronischen Moduls mit dem Private Key des Herstellers verstanden. Wie bereits zuvor erwähnt, sind auch weitere Signaturverfahren einsetzbar, wie z.B. DSA, ECDSA, etc. Die Erstellung kann auch unter Verwendung zusätzlicher Zwischenschritte erfolgen, wie z.B. unter Verwendung eines Hashes (SHA256). Durch die Signatur bestätigt ein Hersteller die Herkunft der Public Keys der elektronischen Module, insbesondere aus seiner Produktion.

Möchte man sicherstellen, dass ein elektronisches Modul nur in Feldgeräten autorisierter Hersteller eingesetzt wird, kann im dem elektronischen Modul eine Liste mit als vertrauenswürdig eingestuften Herstellern von Feldgeräten abgespeichert sein. Nur wenn das elektronische Modul sicherstellen kann, dass es sich in einem vertrauenwürdigen Feldgerät eingesetzt ist, stellt es seine (volle) Funktionalität zur Verfügung.

Zwecks Überprüfung, ob die Herstellersignatur zum Hersteller und zum ausgetauschten oder hinzugefügten elektronischen Modul passt, werden die Herstellersignatur, der Public Key des Herstellers und der Public Key des elektronischen Moduls ausgelesen und überprüft.

Lässt sich die Herstellersignatur des ausgetauschten oder hinzugefügten elektronischen Moduls mit dem Public Key des Herstellers als Teil des erfindungsgemäßen Verfahrens entschlüsseln, so ist sichergestellt, dass der Public Key des elektronischen Moduls von einem vertrauenswürdigen Hersteller stammt.

Erfindungsgemäß erfolgt die entsprechende Überprüfung, ob das ausgetauschte oder hinzugefügte elektronische Modul, mit welchem das Feldgerät oder die Einheit kommuniziert, und der Publik Key des elektronischen Moduls auch tatsächlich zusammengehören, über ein Challenge-Response Verfahren. Hierbei wird von dem Feldgerät oder alternativ der mit dem Feldgerät kommunizierenden Einheit eine beliebige Nachricht als Challenge an das ausgetauschte oder hinzugefügte elektronische Modul gesendet mit der Bitte um Signaturerstellung bzw. Verschlüsselung mit dem Private Key. Das ausgetauschte oder hinzugefügte elektronische Modul signiert bzw. verschlüsselt die Nachricht mit seinem Private Key und sendet die signierte Nachricht als Response an das Feldgerät oder die Einheit zurück. Das Feldgerät oder die Einheit entschlüsselt die signierte Nachricht unter Verwendung des Public Key des ausgetauschten oder hinzugefügten elektronischen Moduls und erhält bei positiver Überprüfung die Nachricht zurück. Alternativ ist es auch möglich, dass die Nachricht zuerst gehasht und anschließend mit dem Private Key des elektronischen Moduls verschlüsselt wird. Dies ist insbesondere dann vorteilhaft, wenn lange Nachrichten oder Nachrichten unbekannter/variabler Länge kommuniziert werden. Durch das Hashen können die Nachrichten u.a. auf eine definierte Länge gebracht werden.

Gemäß einer Weiterbildung des erfindungsgemäßen Verfahrens wird folgender Verfahrensschritt vorgeschlagen:
Ergibt die Überprüfung, dass das ausgetauschte oder hinzugefügte elektronische Modul keine Herstellersignatur oder kein Schlüsselpaar aufweist, so wird überprüft, ob eine Herstellersignatur und/oder ein Schlüsselpaar für das elektronische Modul erzeugt oder bereitgestellt werden kann. In dem Fall, dass die Herstellersignatur und/oder das Schlüsselpaar bereitgestellt bzw. erzeugt werden kann, wird die Herstellersignatur und/oder das Schlüsselpaar an das ausgetauschte oder hinzugefügte elektronische Modul übergeben. Hierbei ist Folgendes zu beachten: Die Private Keys der autorisierten Hersteller sind von den Herstellern natürlich geheim zu halten; deshalb sind sie im Feldgerät nicht verfügbar. Hat ein elektronisches Modul kein Schlüsselpaar, so kann, wenn ein entsprechender Generator vorhanden ist, das Schlüsselpaar erzeugt und dem elektronischen Modul zuordnet werden. Fehlt die Herstellersignatur, kann das Feldgerät ersatzweise das tun, was normalerweise der Hersteller selbst tut: Es tritt als Hersteller mit dem Public Key Q des Feldgeräts auf und verbürgt sich für den Public Key des elektronischen Moduls durch Erstellung einer Signatur q(Pk) unter Verwendung des Private Keys q des Feldgeräts. In diesem Fall ist es natürlich erforderlich, dass der Public Key Q des Feldgeräts als Quasi-Hersteller in der Liste der als vertrauenswürdig eingestuften Hersteller gelistet ist/wird.

Weiterhin ist der folgende Verfahrensschritt vorgesehen: Für den Fall, dass das elektronische Modul keine Herstellersignatur und/oder kein geeignetes Schlüsselpaar besitzt oder dass keine Herstellersignatur und/oder kein geeignetes Schlüsselpaar für das elektronische Modul erzeugt werden können/kann, bleibt das elektronische Modul von der Kommunikation des Feldgeräts ausgeschlossen.

Eine bevorzugte Ausgestaltung sieht folgenden Verfahrensschritt vor: Ergibt die Überprüfung, dass das ausgetauschte oder hinzugefügte elektronische Modul die Herstellersignatur und das geeignete Schlüsselpaar besitzt, dass der Public Key des Herstellers aber nicht in der Liste gespeichert ist, wird der Public Key des Herstellers der Liste zugeordnet, wenn eine autorisierte Person, z.B. eine Servicefachkraft, die Vertrauenswürdigkeit des Herstellers des elektronischen Moduls bestätigt.

Darüber hinaus wird Folgendes vorgeschlagen: Für den Fall, dass für das elektronische Modul eine Herstellersignatur q(Pk) und ein geeignetes Schlüsselpaar (Pk, pk) erzeugt werden können, werden die Daten dem elektronischen Modul zugeordnet bzw. in dem elektronischen Modul gespeichert.

Im Zusammenhang mit der Erfindung ist vorgesehen, dass die elektronischen Module von einem autorisierten Hersteller, dem Original-Hersteller oder einem vom Original-Hersteller autorisierten Dritten, während des Produktionsprozesses mit jeweils einem geeigneten Schlüsselpaar versehen werden; weiterhin werden die Public Keys der autorisierten Hersteller in der Liste der als vertrauenswürdig eingestuften Hersteller gespeichert. Die Erzeugung der Schlüsselpaare und der Herstellersignaturen der elektronischen Module erfolgt üblicherweise in der Produktion des Herstellers. Nur so kann gewährleistet werden, dass die Private Keys der Hersteller geheim gehalten werden. Ansonsten würde die Signatur - also die Verschlüsselung mit dem Private Key des Herstellers - ihre Wirkung bzw. Aussagekraft verlieren.

Bei einem Service-Einsatz vor Ort kann aber unter gewissen Umständen der Liste der als vertrauenswürdig eingestuften Hersteller ein weiterer Hersteller hinzugefügt werden. Dies kann z.B. so vor sich gehen, dass sich eine autorisierte Person ins Feldgerät einloggt und aktiv den Public Key eines zusätzlichen Herstellers in die Liste einschreibt bzw. von einem der gesteckten elektronischen Module übernimmt. Möglich ist es weiterhin, dass sich der zusätzliche Hersteller an einen bereits in der Liste aufgenommenen Hersteller, insbesondere den Original-Hersteller, wendet und diesen bittet, z.B. ein Add-Vendor-Ticket zu erstellen, welches der zusätzliche Hersteller dann allen seinen elektronischen Modulen beifügen kann. Ein solches Ticket muss den durch einen autorisierten Hersteller signierten Public Key des zusätzlichen Herstellers enthalten, wodurch sich der autorisierte Hersteller für den Public Key des zusätzlichen Herstellers verbürgt.

Weiterhin ist vorgesehen, dass beim Austausch eines elektronischen Moduls der Public Key des autorisierten Herstellers aus der Liste gelöscht wird, falls dieser Hersteller keine weiteren elektronischen Module des Feldgeräts bereitgestellt hat.

Bevorzugt erfolgt die Überprüfung während des laufenden Betriebs des Feldgeräts. Diese Überprüfung kann auch nach einem Neustart des Feldgeräts durchgeführt werden oder zyklisch nach beliebig vorgegebenen Zeitintervallen.

Wie bereits erwähnt, ist es ebenso möglich, anstelle des Public Key des autorisierten Herstellers eine Ableitung, z.B. einen Hashwert, oder eine anderweitige unabhängige und eindeutige Identifikation zu verwenden.

Ebenso ist es möglich, die Herstellersignatur unter Anwendung eines zusätzlichen Zwischenschritts zu berechnen: So wird beispielsweise vor der Verschlüsselung mit dem Private Key des Herstellers ein Hash-Wert des Public Keys des elektronischen Moduls ermittelt.

Die Erfindung wird anhand der nachfolgenden Figuren näher erläutert. Es zeigt:
Fig. 1: eine schematische Darstellung eines Feldgeräts mit mehreren Modulen und einer Liste mit als vertrauenswürdig eingestuften Modulherstellern,
Fig. 2: eine schematische Darstellung eines Feldgeräts mit mehreren Modulen, bei dem ein Modul eines unbekannten Herstellers hinzugefügt worden ist,
Fig. 3: eine schematische Darstellung eines Feldgerät mit mehreren Modulen, bei dem sich das Feldgerät quasi selbst zum Hersteller befähigt, und
Fig. 4 ein Flussdiagramm, das das erfindungsgemäße Verfahren und seine Ausgestaltungen visualisiert.

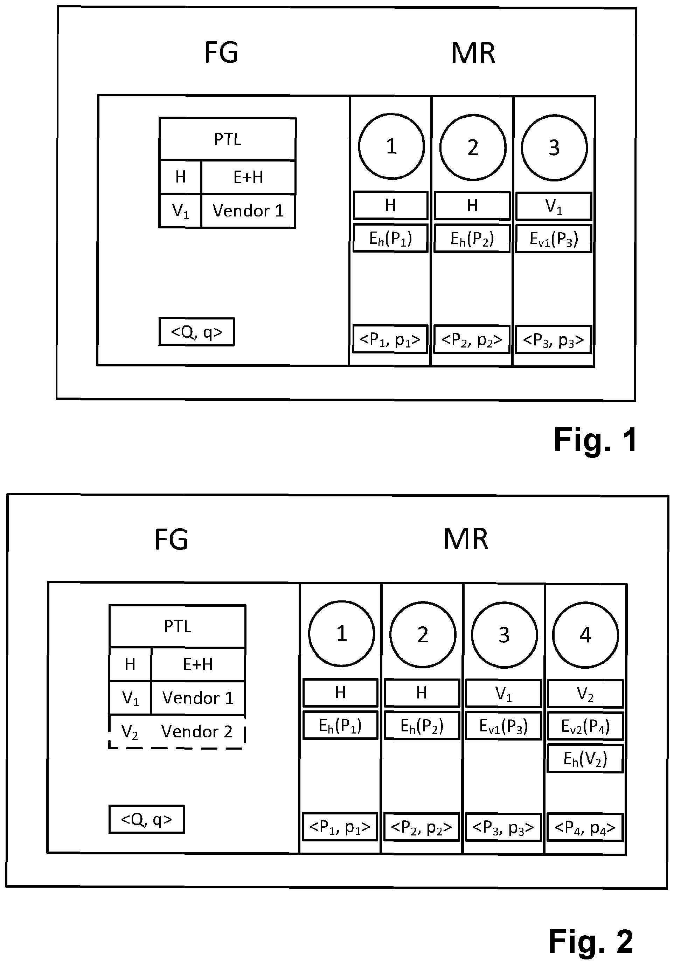

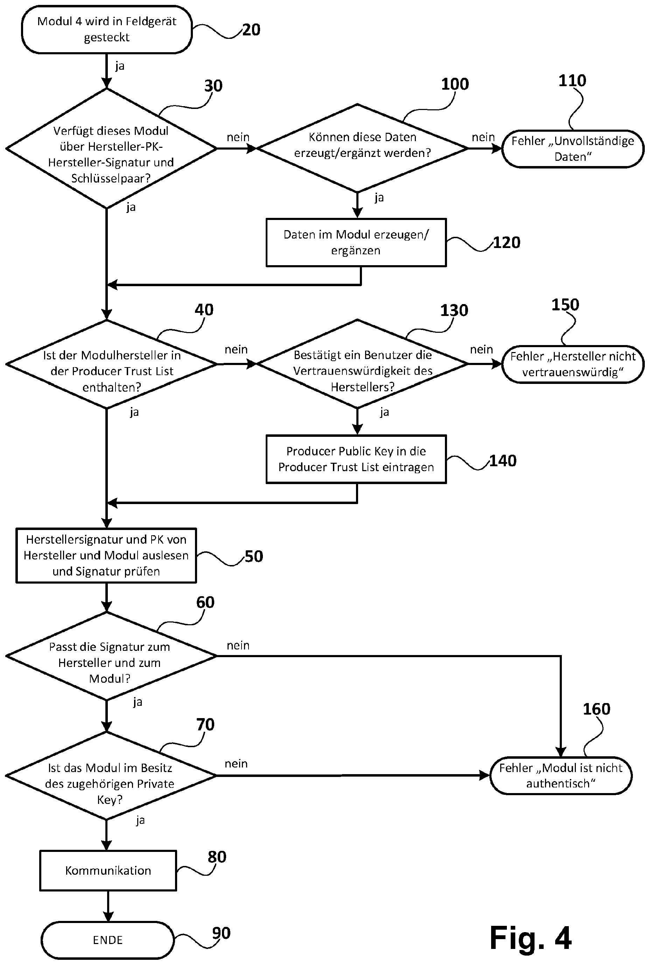

Fig. 1 zeigt eine schematische Darstellung eines Feldgeräts FG mit mehreren Modulen Mk mit k = 1, 2, 3 und einer Liste PTL mit Public Keys H, V1 von als vertrauenswürdig eingestuften Modulherstellern. Zwei der elektronischen Module M1, M2 sind vom Originalhersteller gefertigt, ein Modul M3 stammt von einem als vertrauenswürdig eingestuften autorisierten Hersteller (Vendor 1). Da sowohl der Originalhersteller als auch der/die als vertrauenswürdig eingestuften Modulhersteller autorisierte Hersteller sind, wird der Einfachheit halber in den Patentansprüchen und in der Beschreibung der Fig. 4 für die Public Keys von autorisierten Modulherstellern die Abkürzung Vm und für die entsprechenden Private Keys die Abkürzung vm verwendet, wobei m = 1, 2, ... I ist.

Neben seinem eigenen Schlüsselpaar (Q, q) ist in dem Feldgerät FG die Liste PTL mit den Public Keys H, V1 der als vertrauenswürdig eingestuften Modulhersteller gespeichert. Jedes elektronische Modul Mk enthält neben seinem eigenen Schlüsselpaar (Pk, pk) den Public Key H, V1 des entsprechenden Modulherstellers und den mit dem entsprechenden Private Key h, v1 des Modulherstellers verschlüsselten Public Key h(P1), h(P2), v1(P3) der elektronischen Module Mk. Die mit den entsprechenden Private Keys h, vm des Modulherstellers verschlüsselten Public Keys h(P1), h(P2), v1(P3) der elektronischen Module Mk werden auch als Herstellersignaturen bezeichnet. Die Verschlüsselung selbst ist in den Figuren Fig. 1 bis Fig. 3 mit dem Buchstaben E gekennzeichnet.

Das Schlüsselpaar (Q, q) des Feldgeräts FG dient gegebenenfalls dazu, dass sich das Feldgerät FG gegenüber anderen Feldgeräten als authentisches Feldgerät FG des Originalherstellers oder eines autorisierten Herstellers ausweisen kann. Für die Erkennung, ob ein elektronisches Modul Mk von einem autorisierten Hersteller stammt und somit in die für den Betrieb des Feldgeräts notwendige Kommunikation eingebunden werden darf oder nicht, hat das Schlüsselpaar (Q, q) jedoch nur in dem Fall Relevanz, dass eine Herstellersignatur q(Pk) für ein elektronisches Modul Mk erzeugt werden soll. Dies ist insbesondere deshalb notwendig, da die elektronischen Module Mk selbst keine Information darüber besitzen, welcher Hersteller vertrauenswürdig bzw. nicht vertrauenswürdig ist. Möglich ist es jedoch, dass der autorisierte Hersteller- wie bereits zuvor erwähnt - ein entsprechenden Add-Vendor Ticket direkt auf das elektronische Modul Mk aufspielt.

Fig. 2 eine schematische Darstellung eines Feldgeräts FG mit mehreren Modulen Mk, bei dem ein Modul M4 eines bislang unbekannten Herstellers hinzugefügt worden ist. Der Hersteller hat einen Public Key V2, der zur Zeit des Einbaus des elektronischen Moduls M4 noch nicht in der Liste PTL der als vertrauenswürdig eingestuften Hersteller eingetragen ist. Allerdings ist der Public Key V2 des Herstellers von einem der in die Liste der als vertrauenswürdig eingestuften Hersteller, hier von dem Private Key h des Originalherstellers signiert. Der Public Key des Herstellers V2 wird in die Liste PTL der als vertrauenswürdig eingestuften Hersteller aufgenommen, wenn sich z.B. eine autorisierte Person am Feldgerät FG einloggt und den Public Key V2 des neuen Herstellers der Liste PTL hinzufügt.

Weiterhin besitzt das elektronische Modul M4 die Herstellersignatur v2(P4) und das dem elektronischen Modul M4 zugeordnete Schlüsselpaar (P4, p4).

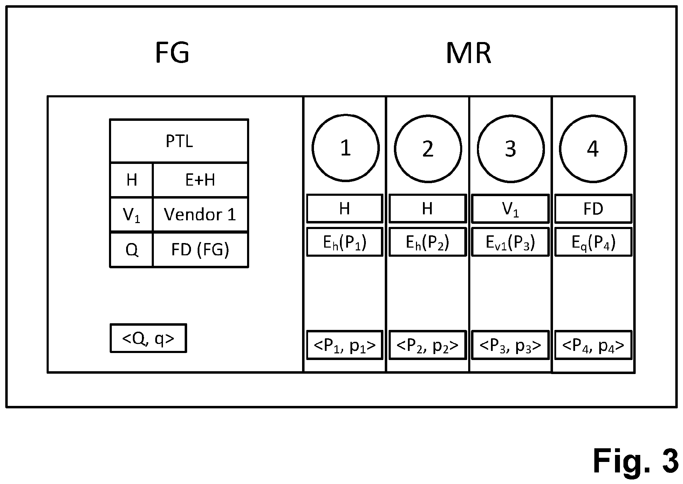

Fig. 3 zeigt eine schematische Darstellung eines Feldgerät FG mit mehreren Modulen Mk. Hier ist der Fall visualisiert, dass sich das Feldgerät FG quasi selbst zum Hersteller befähigt. Das Feldgerät FG signiert das hinzugefügte Modul M4 - es verschlüsselt also den Public Key P4 des elektronischen Moduls M4 mit seinem Private Key q - übergibt dem elektronischen Modul M4 die Hersteller-Signatur q(P4), so dass sich das elektronische Modul M4 nachfolgend gegenüber dem Feldgerät FG ausweisen kann. Weiterhin muss das Feldgerät FG seinen Public Key Q der Liste PTL der als vertrauenswürdig eingestuften Hersteller hinzufügen. Mit dieser Vorgehensweise akzeptiert das Feldgerät FG nachfolgend alle von ihm signierten elektronischen Module Mk.

Eine Alternative hierzu wäre, dass das Feldgerät FG neben seiner Liste PTL mit den als vertrauenswürdig eingestuften Herstellern eine Liste MTL mit den als vertrauenswürdig eingestuften elektronischen Modulen besitzt. In diesem Fall kann die Hersteller-Signatur q(P4) des elektronischen Moduls M4 entfallen. Ein Verfahren, wie sichergestellt werden kann, dass in einem Feldgerät FG nur als vertrauenswürdig eingestufte elektronische Module Mk zum Einsatz kommen, ist übrigens in der zeitgleich mit dieser Patentanmeldung eingereichten Patentanmeldung der Anmelderin im Detail beschrieben.

Fig. 4 zeigt ein Flussdiagramm, das das erfindungsgemäße Verfahren und seine Ausgestaltungen visualisiert. Während der Produktion oder während des laufenden Betriebes des Feldgeräts FG wird bei Punkt 20 entweder ein elektronisches Modul MK ausgetauscht oder es wird ein neues Modul M4 (Fig. 2) gesteckt. Da das ausgetauschte oder hinzugefügte elektronische Modul Mk, M4 nur dann in die für den Betrieb des Feldgeräts FG erforderliche Kommunikation mit einbezogen wird, wenn sichergestellt ist, dass das elektronische Modul Mk von einem autorisierten Hersteller V1 stammt und in diesem Sinne authentisch ist, muss die Herkunft des elektronischen Moduls Mk überprüfbar sein.

Unter dem Programmpunkt 30 wird in einem ersten Schritt geprüft, ob das ausgetauschte oder hinzugefügte elektronische Modul Mk über folgende Datenelemente verfügt:
a) den Public Key Vm des Herstellers - dieser wird vom Feldgerät FG angefordert, um die Identität des Herstellers zu ermitteln und um zu überprüfen, ob der Hersteller als vertrauenswürdig eingestuft ist,
b) das dem elektronischen Modul Mk zugeordnete Schlüsselpaar Pk, pk - seine kryptografische Identität - bestehend aus Public Key Pk und Private Key pk,
c) die Herstellersignatur vm(Pk) - also den mit dem Private Key vm des Herstellers verschlüsselten Public Key Pk des elektronischen Moduls Mk.

Wird die Verfügbarkeit der zuvor genannten Datenelemente bei Programmpunkt 30 bejaht, so wird unter Programmpunkt 40 überprüft, ob der Public Key Vm des Herstellers des elektronischen Moduls Mk in der dem Feldgerät FG zugeordneten Liste PTL der als vertrauenswürdig eingestuften Hersteller aufgelistet ist. Bei positivem Ausgang der Überprüfung hat es den Anschein, dass es sich um ein elektronisches Modul Mk eines vertrauenswürdigen Herstellers handelt. Diese Vermutung ist nachfolgend zu beweisen.

Unter dem Programmpunkt 50 sind die erforderlichen Maßnahmen zur Beweisführung genannt: Das Feldgerät FG fordert die Herstellersignatur vm(Pk) und den Public Key Pk des elektronischen Moduls Mk an.

Bei Programmpunkt 60 wird geprüft, ob die Signatur vm(Pk) zu einem autorisierten Hersteller des Moduls Mk passt. Diese Überprüfung ist positiv, wenn sich der vom Hersteller mit seinem Private Key vm signierte Public Key Pk des elektronischen Moduls Mk mit dem Public Key Vm des Herstellers entschlüsseln lässt. Dann kann davon ausgegangen werden, dass derjenige, der die Signatur vm(Pk) in das Modul Mk eingeschrieben hat, im Besitz des Private Key vm eines autorisierten Herstellers gewesen ist. Im Vertrauen darauf, dass der Private Key vm nicht kompromittiert ist/wurde, muss der Public Key Pk des elektronischen Moduls Mk folglich von diesem autorisierten Hersteller signiert worden sein.

Anschließend wird unter dem Programmpunkt 70 überprüft, ob das elektronische Modul MK auch im Besitz des zugehörigen Private Key pk ist. Durch diesen dritten Schritt kann sichergestellt werden, dass das ausgetauschte oder hinzugefügte elektronische Modul Mk und der Public Key Pk des elektronischen Moduls Mk auch tatsächlich zusammengehören. Diese letzte Überprüfung erfolgt nun mittels des challenge-response Verfahrens mit oder ohne Hashing.

Als challenge verschlüsselt das ausgetauschte oder hinzugefügte Modul Mk eine vom Feldgerät FG geschickte Nachricht m unter Verwendung des eigenen Privat Keys pk und sendet die signierte Nachricht pk(m) als response an das Feldgerät FG. Das Feldgerät FG entschlüsselt die Signatur pk(m) unter Verwendung des vorhandenen Public Key Pk des elektronischen Moduls Mk und erwartet als Ergebnis die unverschlüsselte Nachricht m. Ist dem so, kann eindeutig der Schluss gezogen werden, dass das elektronische Modul Mk im Besitz des Private Keys pk sein muss. Folglich muss auch der Public Key Pk zu dem Private Key pk des elektronischen Moduls Mk gehören.

Nur wenn bei den zuvor genannten Überprüfungen in jedem Fall ein positives Ergebnis erhalten wird, wird das elektronische Modul Mk als authentisch befunden - seine Herkunft von einem als vertrauenswürdig eingestuften Hersteller ist bewiesen - und in die für den Betrieb des Feldgeräts FG erforderliche Kommunikation (Programmpunkt 80) mit einbezogen; das Programm wird bei Punkt 90 beendet.

Ergibt die Überprüfung bei Programmpunkt 30, dass das ausgetauschte oder hinzugefügte elektronische Modul Mk nicht über die Datenelemente: Public Key Vm des Herstellers, das dem elektronischen Modul Mk zugeordnete Schlüsselpaar Pk, pk und die Herstellersignatur vm(Pk) - also den mit dem Private Key vm des Herstellers verschlüsselten Public Key Pk des elektronischen Moduls Mk - verfügt, so wird bei Programmpunkt 100 überprüft, ob diese Datenelemente ggf. erzeugt oder ergänzt werden können. Ergibt die Überprüfung unter dem Programmpunkt 100, dass keine Erzeugung oder Ergänzung der Datenelemente möglich ist, so wird bei Programmpunkt 110 die Fehlermeldung "Unvollständige Daten" ausgegeben; nachfolgend wir die Überprüfung beendet. Können die Datenelemente bei Programmpunkt 120 erzeugt oder ergänzt werden, so wird die Überprüfung bei Programmpunkt 40 fortgesetzt.

Ergibt die Überprüfung bei Programmpunkt 40, dass der Public Key Vm des Modulherstellers nicht in der Liste PTL der als vertrauenswürdig eingestuften Hersteller eingetragen ist, so kann ein autorisierter Benutzer/ein Servicetechniker dennoch bei Programmpunkt 130 die Vertrauenswürdigkeit des Moduls Mk bestätigen. Alternativ kann auch ein Add-Vendor Ticket im Feldgerät FG oder im elektronischen Modul Mk vorhanden sein. Erfolgt diese Bestätigung, so wird der Public Key Vm des Herstellers in die Liste der als vertrauenswürdig eingestuften Hersteller aufgenommen (Programmpunkt 140). Erfolgt keine Bestätigung der Vertrauenswürdigkeit bei Programmpunkt 130, so wird bei Programmpunkt 150 die Fehlermeldung "Hersteller nicht vertrauenswürdig" erzeugt und die Überprüfung beendet.

Ergeben die Überprüfungen bei einem der Programmpunkte 60, 70, dass die Signatur vm(Pk) nicht zum Hersteller oder zum elektronischen Modul Mk passt oder dass das elektronische Modul Mk nicht im Besitz des zugehörigen Private Key pk ist, dann wird die Fehlermeldung: "Modul ist nicht authentisch" ausgegeben (Programmpunkt 160). Eine für den Betrieb des Feldgeräts erforderliche Kommunikation ist dann ausgeschlossen.

## Patentansprüche

1. Verfahren zur Überprüfung der authentischen Herkunft von elektronischen Modulen (Mk mit k = 1, 2 ... n) eines modular aufgebauten Feldgeräts (FG) der Automatisierungstechnik,
wobei jedem als vertrauenswürdig eingestuften Hersteller eines elektronischen Moduls (Mk) des Feldgeräts (FG) ein Schlüsselpaar (Vm, vm mit m = 1, ... I) bestehend aus einem Public Key (Vm) und einem Private Key (vm) zugeordnet ist, und wobei die Public Keys (Vm) der als vertrauenswürdig eingestuften Hersteller in einer Liste (PTL) im Feldgerät (FG) oder in einer mit dem Feldgerät (FG) kommunizierenden Einheit gespeichert sind,
wobei jedes elektronische Modul (Mk) des Feldgeräts (FG) neben einem das elektronische Modul (Mk) als vertrauenswürdig kennzeichnenden geeigneten Schlüsselpaar (Pk, pk mit k = 1, 2.... n), bestehend aus einem Public Key (Pk) und einem Private Key (pk), den Public Key (Vm) des Herstellers und eine Herstellersignatur (vm(Pk) enthält, wobei die Herstellersignatur (vm(Pk) den Public Key (Pk) des elektronischen Moduls (Mk) als vertrauenswürdig bestätigt,
wobei das Verfahren die folgenden Verfahrensschritte aufweist:
- beim Austausch oder beim Hinzufügen eines elektronischen Moduls (Mk) wird von dem Feldgerät (FG) oder der mit dem Feldgerät (FG) kommunizierenden Einheit (U) überprüft:
- ob das ausgetauschte oder hinzugefügte elektronische Modul (Mk) ein Schlüsselpaar (Pk, pk) und eine Herstellersignatur (vm(Pk) aufweist,
- ob der Public Key (Vm) des Herstellers des elektronischen Moduls (Mk) in der Liste (PTL) mit den Public Keys (Vm) der als vertrauenswürdig eingestuften Hersteller aufgeführt ist,
- ob die Herstellersignatur (vm(Pk) zum Hersteller und zum elektronischen Modul (Mk) passt, also ob das elektronische Modul (Mk) auch tatsächlich vom vertrauenswürdigen Hersteller stammt, wobei diese Überprüfung positiv ist, wenn sich die Herstellersignatur ausgetauschten oder hinzugefügten elektronischen Moduls (Mk) mit dem Public Key (Vm) des Herstellers entschlüsseln lässt und
- ob das elektronische Modul (Mk) im Besitz des korrekten Private Key (pk) ist, wobei diese Überprüfung mittels eines Challenge-Response Verfahrens erfolgt,
eine die Funktionalität des Feldgeräts (FG) betreffende Kommunikation oder Interaktion des ausgetauschten oder hinzugefügten elektronischen Moduls (Mk) mit dem Feldgerät (FG) oder einem anderweitigen elektronischen Modul (Mk) wird zugelassen, wenn die Überprüfung mit einem positivem Ergebnis abgeschlossen wird.

2. Verfahren nach Anspruch 1 mit folgendem Verfahrensschritt:
Zwecks Überprüfung, ob die Herstellersignatur (vm(Pk) ) zum Hersteller und zum ausgetauschten oder hinzugefügten elektronischen Modul (Mk) passt, werden die Herstellersignatur (vm(Pk)), der Public Key (Vm) des Herstellers und der Public Key (Pk) des elektronischen Modul (Mk) ausgelesen und überprüft.

3. Verfahren nach Anspruch 1 mit folgenden Verfahrensschritten:
Von dem Feldgerät (FG) oder der mit dem Feldgerät kommunizierenden Einheit wird eine beliebige Nachricht (m) als Challenge an das ausgetauschte oder hinzugefügte elektronische Modul (Mk) gesendet mit der Bitte um Signaturerstellung (pk(m)) bzw. Verschlüsselung,
das ausgetauschte oder hinzugefügte elektronische Modul (Mk) signiert bzw. verschlüsselt die Nachricht (m) mit seinem Private Key (pk) und sendet die signierte Nachricht (pk(m)) als Response an das Feldgerät (FG) oder die Einheit zurück,
das Feldgerät (FG) oder die Einheit entschlüsselt die signierte Nachricht (pk(m)) unter Verwendung des Public Key (Pk) des ausgetauschten oder hinzugefügten elektronischen Moduls (Mk) und erhält bei positiver Überprüfung die Nachricht (m).

4. Verfahren nach einem oder mehreren der vorhergehenden Ansprüche mit folgendem Verfahrensschritt:
Ergibt die Überprüfung, dass das ausgetauschte oder hinzugefügte elektronische Modul (Mk) keine Herstellersignatur (vm(Pk) oder kein Schlüsselpaar (Pk, pk) aufweist, so wird überprüft, ob eine Herstellersignatur (vm(Pk) und/oder ein Schlüsselpaar (Pk, pk) für das elektronische Modul (Mk) erzeugt oder bereitgestellt werden kann,
wobei in dem Fall, dass die Herstellersignatur (vm(Pk) und/oder das Schlüsselpaar (Pk, pk) von einem weiteren elektronischen Modul (Mk) bereitgestellt bzw. erzeugt wird, die Herstellersignatur (vm(Pk) und/oder das Schlüsselpaar (Pk, pk) an das ausgetauschte oder hinzugefügte elektronische Modul (Mk) übergeben wird.

5. Verfahren nach Anspruch 4 mit folgendem Verfahrensschritt:
Für den Fall, dass das elektronische Modul (Mk) keine Herstellersignatur (vm(Pk) und/oder kein geeignetes Schlüsselpaar (Pk, pk) besitzt oder dass keine Herstellersignatur (vm(Pk) und/oder kein geeignetes Schlüsselpaar (Pk, pk) für das elektronische Modul (Mk) erzeugt werden kann, bleibt das elektronische Modul (Mk) von der Kommunikation ausgeschlossen.

6. Verfahren nach einem oder mehreren der vorhergehenden Ansprüche mit folgenden Verfahrensschritten:
Ergibt die Überprüfung, dass das ausgetauschte oder hinzugefügte elektronische Modul (Mk) die Herstellersignatur (vm(Pk)) und das geeignete Schlüsselpaar (Pk, pk) besitzt, dass der Public Key (Vm) des Herstellers aber nicht in der Liste (PTL) gespeichert ist, wird der Public Key (Vm) des Herstellers der Liste (PTL) zugeordnet, wenn eine autorisierte Person die Vertrauenswürdigkeit des elektronischen Moduls (Mk) Herstellers bestätigt.

7. Verfahren nach einem oder mehreren der vorhergehenden Ansprüche mit folgenden Verfahrensschritten:
für den Fall, dass für das elektronische Modul (Mk) eine Herstellersignatur (q(Pk)) und geeignetes Schlüsselpaar (Pk, pk) erzeugt werden können, werden die Daten dem elektronischen Modul (Mk) zugeordnet bzw. in dem elektronischen Modul (Mk) gespeichert.

8. Verfahren nach einem oder mehreren der vorhergehenden Ansprüche mit folgenden Verfahrensschritten:
- die elektronischen Module (Mk) werden von einem autorisierten Hersteller, dem Original-Hersteller oder einem vom Original-Hersteller autorisierten Dritten, während des Produktionsprozesses oder bei einem Service-Einsatz mit jeweils einem geeigneten Schlüsselpaar (Pk, pk) versehen, und
die Public Keys (Vm) der autorisierten Hersteller werden in der Liste (PTL) gespeichert.

9. Verfahren nach einem oder mehreren der vorhergehenden Ansprüche mit folgendem Verfahrensschritt:
Beim Austausch eines elektronischen Moduls (Mk) wird der Public Key (Vm) des autorisierten Herstellers aus der Liste (PTL) gelöscht.

10. Verfahren nach einem oder mehreren der vorhergehenden Ansprüche mit folgendem Verfahrensschritt:
Die Überprüfung wird während des laufenden Betriebs des Feldgeräts (FG) durchgeführt.

11. Verfahren nach einem oder mehreren der vorhergehenden Ansprüche mit folgendem Verfahrensschritt:
Anstelle des Public Key (Vm) des autorisierten Herstellers wird eine Ableitung, z.B. ein Hashwert, oder eine anderweitige unabhängige und eindeutige Identifikation verwendet.

12. Verfahren nach einem oder mehreren der vorhergehenden Ansprüche mit folgenden Verfahrensschritten:
- die Herstellersignatur vm(Pk) wird unter Anwendung eines zusätzlichen Zwischenschritts berechnet: vor der Verschlüsselung mit dem Private Key (vm) des Herstellers wird ein Hash-Wert ermittelt.

13. Verfahren nach einem oder mehreren der Ansprüche 1-12,
wobei als elektronische Module (Mk) insbesondere Steckmodule mit Leiterkarten oder Sensoren mit digitaler Anbindung verwendet werden.

## Claims

1. A method for verifying the authentic origin of electronic modules (Mk where k = 1, 2 ... n) of a modularly constructed field device (FG) in automation technology,
wherein each manufacturer of an electronic module (Mk) of the field device (FG) classified as trustworthy is assigned a key pair (Vm, vm where m = 1, ... 1) consisting of a public key (Vm) and a private key (vm), and wherein the public keys (Vm) of the manufacturers classified as trustworthy are stored in a list (PTL) in the field device (FG) or in a unit communicating with the field device (FG), wherein each electronic module (Mk) of the field device (FG) contains, in addition to a suitable key pair (Pk, pk where k = 1, 2 ... n) characterizing the electronic module (Mk) as trustworthy and consisting of a public key (Pk) and a private key (pk), the manufacturer's public key (Vm) and a manufacturer signature (vm(Pk)), wherein the manufacturer signature (vm(Pk)) confirms the public key (Pk) of the electronic module (Mk) as trustworthy,
wherein the method has the following method steps:
- when an electronic module (Mk) is exchanged or added, the field device (FG) or the unit (U) communicating with the field device (FG) checks:
- whether the exchanged or added electronic module (Mk) has a key pair (Pk, pk) and a manufacturer signature (vm(Pk)),
- whether the public key (Vm) of the manufacturer of the electronic module (Mk) is listed in the list (PTL) with the public keys (Vm) of the manufacturers classified as trustworthy,
- whether the manufacturer signature (vm(Pk)) matches the manufacturer and the electronic module (Mk), that is to say whether the electronic module (Mk) also actually originates from the trustworthy manufacturer, this check being positive if the manufacturer signature of the exchanged or added electronic module (Mk) can be decrypted with the manufacturer's public key (Vm), and
- whether the electronic module (Mk) is in possession of the correct private key (pk), this check being performed by means of a challenge/response method,
a communication or interaction of the exchanged or added electronic module (Mk) with the field device (FG) or another electronic module (Mk) relating to the functionality of the field device (FG) is permitted if the check is concluded with a positive result.

2. The method as claimed in claim 1, comprising the following method step:
in order to check whether the manufacturer signature (vm(Pk)) matches the manufacturer and the exchanged or added electronic module (Mk), the manufacturer signature (vm(Pk)), the manufacturer's public key (Vm) and the public key (Pk) of the electronic module (Mk) are read out and checked.

3. The method as claimed in claim 1, comprising the following method steps:
from the field device (FG) or the unit communicating with the field device, an arbitrary message (m) is sent as a challenge to the exchanged or added electronic module (Mk) with the request for signature creation (pk(m)) or encryption,
the exchanged or added electronic module (Mk) signs or encrypts the message (m) with its private key (pk) and returns the signed message (pk(m)) as a response to the field device (FG) or the unit,
the field device (FG) or the unit decrypts the signed message (pk(m)) using the public key (Pk) of the exchanged or added electronic module (Mk) and receives the message (m) upon a positive check.

4. The method as claimed in one or more of the preceding claims, comprising the following method step:
if the check indicates that the exchanged or added electronic module (Mk) has no manufacturer signature (vm(Pk)) or no key pair (Pk, pk), a check is made as to whether a manufacturer signature (vm(Pk)) and/or a key pair (Pk, pk) can be generated or provided for the electronic module (Mk), wherein, in the event that the manufacturer signature (vm(Pk)) and/or the key pair (Pk, pk) is provided or generated by another electronic module (Mk), the manufacturer signature (vm(Pk)) and/or the key pair (Pk, pk) is transferred to the exchanged or added electronic module (Mk).

5. The method as claimed in claim 4, comprising the following method step:
in the event that the electronic module (Mk) has no manufacturer signature (vm(Pk)) and/or no suitable key pair (Pk, pk) or that no manufacturer signature (vm(Pk)) and/or no suitable key pair (Pk, pk) can be generated for the electronic module (Mk), the electronic module (Mk) remains excluded from the communication.

6. The method as claimed in one or more of the preceding claims, comprising the following method steps:
if the check indicates that the exchanged or added electronic module (Mk) has the manufacturer signature (vm(Pk)) and the suitable key pair (Pk, pk), but that the manufacturer's public key (Vm) is not stored in the list (PTL), the manufacturer's public key (Vm) is assigned to the list (PTL) if an authorized person confirms the trustworthiness of the electronic module (Mk) manufacturer.

7. The method as claimed in one or more of the preceding claims, comprising the following method steps:
if a manufacturer signature (q(Pk)) and suitable key pair (Pk, pk) can be generated for the electronic module (Mk), the data are assigned to the electronic module (Mk) or stored in the electronic module (Mk).

8. The method as claimed in one or more of the preceding claims, comprising the following method steps:
- the electronic modules (Mk) are each provided with a suitable key pair (Pk, pk) by an authorized manufacturer, the original manufacturer or a third party authorized by the original manufacturer, during the production process or during a service visit, and
the public keys (Vm) of the authorized manufacturers are stored in the list (PTL).

9. The method as claimed in one or more of the preceding claims, comprising the following method step:
when an electronic module (Mk) is exchanged, the public key (Vm) of the authorized manufacturer is deleted from the list (PTL).

10. The method as claimed in one or more of the preceding claims, comprising the following method step:
the check is carried out during ongoing operation of the field device (FG).

11. The method as claimed in one or more of the preceding claims, comprising the following method step:
instead of the public key (Vm) of the authorized manufacturer, a derivation, for example a hash value or another independent and clear identification, is used.

12. The method as claimed in one or more of the preceding claims, comprising the following method step:
- the manufacturer signature (vm(Pk)) is calculated using an additional intermediate step: before encryption with the manufacturer's private key (vm), a hash value is determined.

13. The method as claimed in one or more of claims 1-12,
wherein plug-in modules with circuit boards or sensors with a digital connection are used as the electronic modules (Mk).

## Revendications

1. Procédé destiné à la vérification de l'origine authentique de modules
électroniques (Mk avec k = 1, 2 ... n) d'un appareil de terrain (FG) de construction modulaire de la technique d'automatisation,
procédé pour lequel est associée, à chaque fabricant classé comme digne de confiance d'un module électronique (Mk) de l'appareil de terrain (FG), une paire de clés (Vm, vm avec m = 1, ... l) composée d'une clé publique (Vm) et d'une clé privée (vm), les clés publiques (Vm) des fabricants classés comme étant dignes de confiance étant enregistrées dans une liste (PTL) dans l'appareil de terrain (FG) ou dans une unité communiquant avec l'appareil de terrain (FG),
chaque module électronique (Mk) de l'appareil de terrain (FG) contenant, outre une paire de clés appropriée (Pk, pk avec k = 1, 2.... n) caractérisant le module électronique (Mk) comme étant digne de confiance, laquelle paire est constituée d'une clé publique (Pk) et d'une clé privée (pk), la clé publique (Vm) du fabricant et une signature du fabricant (vm(Pk)), la signature du fabricant (vm(Pk)) confirmant que la clé publique (Pk) du module électronique (Mk) est digne de confiance,
lequel procédé comprend les étapes suivantes :
- lors du remplacement ou de l'ajout d'un module électronique (Mk), l'appareil de terrain (FG) ou l'unité (U) communiquant avec l'appareil de terrain (FG) vérifie :
- si le module électronique (Mk) remplacé ou ajouté présente une paire de clés (Pk, pk) et une signature du fabricant (vm(Pk)),
- si la clé publique (Vm) du fabricant du module électronique (Mk) figure dans la liste (PTL) des clés publiques (Vm) des fabricants considérés comme fiables,
- si la signature du fabricant (vm(Pk)) correspond au fabricant et au module électronique (Mk), c'est-à-dire si le module électronique (Mk) provient effectivement du fabricant digne de confiance, cette vérification étant positive si la signature du fabricant de modules électroniques (Mk) remplacés ou ajoutés peut être décryptée avec la clé publique (Vm) du fabricant et
- si le module électronique (Mk) est en possession de la clé privée (pk) correcte, cette vérification étant effectuée au moyen d'un procédé de réponse au défi,
une communication ou une interaction concernant la fonctionnalité de l'appareil de terrain (FG) du module électronique (Mk) remplacé ou ajouté avec l'appareil de terrain (FG) ou un autre module électronique (Mk) étant autorisée si la vérification se termine par un résultat positif.

2. Procédé selon la revendication 1 avec l'étape de procédé suivante :
Afin de vérifier si la signature du fabricant (vm(Pk)) correspond au fabricant et au module électronique (Mk) remplacé ou ajouté, la signature du fabricant (vm(Pk)), la clé publique (Vm) du fabricant et la clé publique (Pk) du module électronique (Mk) sont lues et vérifiées.

3. Procédé selon la revendication 1 avec l'étape de procédé suivante :
Un message quelconque (m) est envoyé sous forme de défi par l'appareil de terrain (FG) ou l'unité communiquant avec l'appareil de terrain au module électronique (Mk) remplacé ou ajouté, avec demande de création de signature (pk(m)) ou de cryptage,
le module électronique (Mk) remplacé ou ajouté signant ou cryptant le message (m) avec sa clé privée (pk) et renvoyant le message signé (pk(m)) comme réponse à l'appareil de terrain (FG) ou à l'unité, l'appareil de terrain (FG) ou l'unité décryptant le message signé (pk(m)) en utilisant la clé publique (Pk) du module électronique (Mk) remplacé ou ajouté et recevant le message (m) en cas de vérification positive.

4. Procédé selon l'une ou plusieurs des revendications précédentes avec l'étape de procédé suivante :
Si la vérification révèle que le module électronique (Mk) remplacé ou ajouté ne présente pas de signature du fabricant (vm(Pk)) ou de paire de clés (Pk, pk), on vérifie si une signature du fabricant (vm(Pk)) et/ou une paire de clés (Pk, pk) peut être générée ou mise à disposition pour le module électronique (Mk), et
dans le cas où la signature du fabricant (vm(Pk) et/ou la paire de clés (Pk, pk) est mise à disposition ou générée par un autre module électronique (Mk), la signature du fabricant (vm(Pk)) et/ou la paire de clés (Pk, pk) est transmise au module électronique (Mk) remplacé ou ajouté.

5. Procédé selon la revendication 4 avec l'étape de procédé suivante :
Dans le cas où le module électronique (Mk) ne possède pas de signature du fabricant (vm(Pk) et/ou de paire de clés appropriée (Pk, pk) ou si aucune signature du fabricant (vm(Pk) et/ou aucune paire de clés appropriée (Pk, pk) ne peut être générée pour le module électronique (Mk), le module électronique (Mk) reste exclu de la communication.

6. Procédé selon l'une ou plusieurs des revendications précédentes avec l'étape de procédé suivante :
Si la vérification montre que le module électronique (Mk) remplacé ou ajouté possède la signature du fabricant (vm(Pk)) et la paire de clés appropriée (Pk, pk), mais que la clé publique (Vm) du fabricant n'est pas enregistrée dans la liste (PTL), la clé publique (Vm) du fabricant est associée à la liste (PTL) si une personne autorisée confirme la fiabilité du module électronique (Mk) du fabricant.

7. Procédé selon l'une ou plusieurs des revendications précédentes avec l'étape de procédé suivante :
Dans le cas où une signature du fabricant (q(Pk)) et une paire de clés (Pk, pk) appropriées peuvent être générées pour le module électronique (Mk), les données sont attribuées au module électronique (Mk) ou stockées dans le module électronique (Mk).

8. Procédé selon l'une ou plusieurs des revendications précédentes avec les étapes de procédé suivantes :
- Les modules électroniques (Mk) sont dotés chacun d'une paire de clés appropriée (Pk, pk) par un fabricant autorisé, le fabricant d'origine ou un tiers autorisé par le fabricant d'origine, pendant le process de production ou lors d'une intervention de service, et
les clés publiques (Vm) des fabricants autorisés sont enregistrées dans la liste (PTL).

9. Procédé selon l'une ou plusieurs des revendications précédentes avec l'étape de procédé suivante :
Lors du remplacement d'un module électronique (Mk), la clé publique (Vm) du fabricant autorisé est supprimée de la liste (PTL).

10. Procédé selon l'une ou plusieurs des revendications précédentes avec l'étape de procédé suivante :
La vérification est effectuée pendant le fonctionnement de l'appareil de terrain (FG).

11. Procédé selon l'une ou plusieurs des revendications précédentes avec l'étape de procédé suivante :
Au lieu de la clé publique (Vm) du fabricant autorisé, on utilise une dérivation, p. ex. une valeur de hachage, ou un autre identifiant indépendant et unique.

12. Procédé selon l'une ou plusieurs des revendications précédentes avec l'étape de procédé suivante :
- la signature du fabricant vm(Pk) est calculée en utilisant une étape intermédiaire supplémentaire : une valeur de hachage est déterminée avant le cryptage avec la clé privée (vm) du fabricant.

13. Procédé selon l'une des revendications 1 à 12,
pour lequel les modules électroniques (Mk) utilisés sont notamment des modules enfichables avec cartes de circuits imprimés ou des capteurs à connexion numérique.
